# FASCICULE DE BREVET EUROPEEN

(11) **EP 0 352 170 B1**
(45) Date de publication et mention de la délivrance du brevet: **21.06.1995**
(21) Numéro de dépôt: 89401999.1
(22) Date de dépôt: 12.07.1989
(51) Int. Cl.: G07F 7/02

(54) **Procédé et système de gestion d'une mémoire électronique représentative d'unités homogènes prédéterminées**
Geschäftsführungsverfahren und -anlage eines elektronischen Speichers der homogene vorherbestimmte Einheiten repräsentiert
Process and system for the management of an electronic memory representative of predetermined homogeneous units

(30) Priorité: 19.07.1988 FR 8809698
(43) Date de publication de la demande: 24.01.1990
(73) Titulaire: BULL CP8, 78430 Louveciennes (FR)
(72) Inventeur: Hazard, Michel, F-78124 Mareil sur Mauldre (FR)
(74) Mandataire: Corlu, Bernard Edouard

(56) Documents cités:
- EP-A- 227 532
- EP-A- 0 227 532
- FR-A- 2 605 431
- FR-A- 2 608 297

## Description

L'invention est relative à un procédé de gestion d'une mémoire électronique dont le contenu est représentatif d'unités homogènes prédéterminées, et à un système pour la mise en oeuvre de ce procédé.

On connaît des systèmes électroniques comportant une mémoire dont le contenu est représentatif d'unités homogènes prédéterminées et qui mettent en oeuvre des procédés particuliers pour la gestion de cette mémoire. Ainsi, on connaît par exemple des systèmes électroniques de paiement utilisant une carte à mémoire. Dans de tels systèmes, au moins une zone de la mémoire de la carte est destinée à comptabiliser, ou mémoriser des transactions, en vue de leur paiement. Des cellules élémentaires de la zone représentent alors des unités homogènes de paiement, la carte pouvant être prépayée, c'est-à-dire que le crédit alloué dépend d'une somme d'argent effectivement versée par avance, ou bien encore la consommation d'unités peut servir à l'élaboration d'une facturation postérieure. Bien entendu, l'exemple des systèmes de paiement n'est nullement limitatif, et d'autres applications ont déjà été envisagées. Ainsi, une telle mémoire peut servir à comptabiliser toutes sortes de transactions ne nécessitant pas forcément une compensation sous forme de paiement.

Dans de tels systèmes, la zone de la mémoire utilisée pour la comptabilisation est généralement une mémoire inscriptible électriquement (mémoire de type EPROM), et à chaque opération de comptabilisation, l'unité de gestion de la mémoire modifie la structure de cette dernière en "grillant" au moins une cellule de la zone.

Dans les premiers projets de systèmes de paiement utilisant une mémoire électronique, le crédit initial était représenté par un nombre de cellules non grillées de la zone, et chaque transaction s'accompagnait par un grillage d'une cellule de la zone de la façon suivante : la lecture des éléments disponibles dans la zone de mémoire allouée aux transactions s'effectuait dans un sens, et l'écriture (le grillage) dans un autre sens. Lors de la lecture, la limite du crédit était trouvée lorsque le système de gestion détectait la première cellule grillée qu'il rencontrait. Avant une première transaction par convention on considérait qu'il existait une première cellule grillée en fin de zone. Lors d'une transaction, le système se positionnait juste avant la première cellule grillée rencontrée en lecture et décomptait le nombre d'unités correspondant à la transaction, puis venait griller la dernière cellule décomptée. Ainsi, dans la mesure où les différentes transactions portaient sur plusieurs unités, il restait des cellules non grillées entre la première cellule grillée rencontrée lors de la lecture et la fin de la zone. Or, ces premiers systèmes présentaient l'inconvénient majeur qu'ils n'étaient pas rechargeables, c'est-à-dire que lorsque le crédit était épuisé, il n'était pas possible de réutiliser la mémoire.

Pour remédier à ces inconvénients, on a envisagé des procédés de gestion de la mémoire permettant un rechargement, c'est-à-dire l'allocation de nouvelles unités lorsque le crédit initial venait, ou était sur le point, de s'épuiser. Ainsi, dans le cas de systèmes de paiement à carte à mémoire, on a envisagé une possibilité d'allouer un nouveau crédit.

Le rechargement, ou l'allocation d'un nouveau crédit, consiste à rendre utilisable au moins une partie des cellules situées au-delà de la première cellule grillée rencontrée en lecture. Pour cela, on a imaginé des procédés et systèmes qui permettent d'ignorer, lors de la lecture, les cellules grillées lors des transactions précédentes. A cet effet, d'une façon générale, lors d'une transaction, on intervient sur une cellule que l'on grille, et lors d'un rechargement on vient intervenir, en la grillant, sur une autre cellule appariée à la première et qui, selon son état, indique si la première est la limite effective du crédit, ou bien encore doit être ignorée, un rechargement ayant eu lieu. Des procédés et systèmes fondés sur ce principe sont connus de la demande de brevet européen N° 022 75 32 et de la demande de brevet français 2 605 431.

Dans la demande européenne, la mémoire destinée à la comptabilisation des unités est séparée en deux zones d'égale capacité, une première dite de paiement, et une seconde dite de rechargement. Au départ, lorsque la mémoire est vierge, toutes les cellules binaires sont dans un état logique déterminé, correspondant par exemple au "l" logique. L'allocation d'un crédit initial de N unités, si N est inférieur à la capacité de la mémoire, consiste à griller dans la zone de rechargement la N + lème cellule rencontrée en lecture à partir du début de cette zone, de sorte qu'une butée est constituée par un couple (A, B) de cellules, de valeur binaire (1,0), A étant la cellule de rang N + 1 dans la zone de paiement et B la cellule de rang N + 1 dans la zone de rechargement. Lors d'une transaction nécessitant un débit d'unités, on part du début des zones et on compte autant de couples que d'unités à débiter, et on modifie l'état de la dernière cellule comptée dans la zone de paiement, sans toucher à l'état de la cellule correspondante de la zone de rechargement.

Lors d'une autre transaction, on recherche où se situe la dernière cellule grillée en zone de paiement, et on compte au-delà de cette cellule vers la butée, autant de couples que d'unités à débiter. Bien entendu, dans tous les cas, si la transaction porte sur un nombre d'unités supérieur au nombre disponible, alors la transaction est refusée.

Lors d'un rechargement, l'unité de gestion commence par comptabiliser le solde de la carte au moment de l'ordre de rechargement, c'est-à-dire le nombre de couples dans leur état d'origine situés entre le dernier couple modifié et la butée initialement placée, puis, en repartant du début des zones, elle place une nouvelle butée suite à un comptage d'un nombre de couples intacts égal au montant à recharger additionné du solde. La butée est réalisée avec le couple de rang immédiatement supérieur au résultat de l'addition. Suite à cette création d'une nouvelle butée, la cellule non modifiée de tous les couples ayant eu une cellule modifiée entre la création de la butée précédente et la création de la butée présente, c'est-à-dire les couples correspondant à l'ancienne butée et aux transactions antérieures, est modifiée à son tour, de façon que les opérations ultérieures ignorent ces couples.

Ce procédé présente divers inconvénients dans sa mise en oeuvre.

D'une part, la différence de constitution entre les couples indiquant la butée et les couples indiquant les différentes transactions qui ont eu lieu, oblige à avoir un système d'exploitation relativement compliqué, puisque chaque couple peut prendre quatre configurations possibles, à savoir l'état 1,1 qui correspond à une unité disponible, l'état 0,1 qui correspond à une transaction, l'état 1,0 qui correspond à une butée, et enfin l'état 0,0 qui correspond à un couple à ignorer ; d'autre part, lors d'une transaction, il est nécessaire de lire au moins une première fois la totalité de la mémoire élément par élément, jusqu'à la butée, pour repérer la position du couple inscrit lors de la dernière transaction ; enfin, le rechargement est relativement compliqué, puisqu'après avoir positionné une nouvelle butée, il faut relire à nouveau la totalité de la zone de mémoire située entre cette nouvelle butée et le début de la zone, pour d'une part neutraliser la butée précédente, et d'autre part neutraliser les couples modifiés lors de la série de transactions précédentes.

L'invention décrite dans la demande de brevet français 2 605 431 permet de remédier partiellement à ces inconvénients, puisqu'il n'existe plus de différence entre la butée et les inscriptions faites lors des transactions. Avant une transaction, le système d'exploitation recherche la butée précédemment placée et crée une nouvelle butée vers le début de la zone.

La mémoire comporte une seule zone constituée d'éléments ayant chacun une adresse et un nombre pair de cellules. Lorsque la mémoire est dans son état initial, on dit que chaque élément est pair ; lorsqu'il comporte un nombre impair de cellules dans leur état initial, on dit que l'élément considéré est impair ; lorsque toutes les cellules sont modifiées, alors l'élément est dit neutre.

Le positionnement d'une butée consiste à rendre impair un élément précédemment pair, en modifiant l'état de l'une de ses cellules, et le rechargement consiste à rendre disponible des éléments impairs en les rendant à nouveau pairs, tout en ignorant les éléments n'ayant plus aucune cellule modifiable.

Avant chaque transaction, le solde est déterminé par le nombre d'éléments pairs, non neutres, rencontrés avant la butée, qui est donc le premier élément impair rencontré en lecture.

Ce procédé présente l'inconvénient majeur que la recherche de la dernière butée, avant toute transaction, nécessite une lecture cellule par cellule depuis le début de la mémoire, afin de déterminer la parité de chaque élément, puisque la butée est constituée par le premier élément impair rencontré en lecture.

Par ailleurs, un même élément qui, au départ, contient un nombre pair de cellules supérieur à deux, par exemple quatre, six ou plus, peut être utilisé pour plusieurs transactions après rechargement, ce qui complique considérablement la gestion. En effet, un rechargement consiste à créer une nouvelle butée vers le fond de la mémoire, tout en rendant disponibles, c'est-à-dire pairs, les éléments impairs compris entre la dernière butée avant rechargement et la nouvelle à créer, c'est-à-dire tous les éléments qui ont été modifiés lors de la dernière série de transactions avant le rechargement, et de plus, la création de la nouvelle butée doit tenir compte du fait que certains des dits éléments qui avaient été rendus impairs, y compris la dernière butée, sont susceptibles de devenir neutres alors que d'autres seront encore utilisables.

Il faut donc d'une part, comptabiliser précisément le nombre d'éléments réutilisables, et d'autre part, il faut déterminer la parité de tous les éléments rencontrés depuis le début de la zone, en la lisant cellule par cellule, ce qui augmente considérablement les temps de traitement. Par ailleurs, comme dans l'autre procédé de l'art antérieur, il faut modifier un grand nombre de cellules lors du rechargement, ce qui présente des risques non négligeables d'erreur, et de perte de monnaie dans le cas des dispositifs de paiement.

Pour remédier à ces inconvénients, l'invention propose un procédé conforme à la revendication 1 et un système conforme à la revendication 8.

L'invention est particulièrement avantageuse dans la mesure où elle permet un gain de temps considérable dans le traitement des transactions tout en offrant une grande sécurité par rapport aux systèmes de l'art antérieur. En effet, lors d'une transaction, la recherche de la butée précédente ne s'effectue plus par une lecture de la mémoire cellule par cellule mais élément par élément, ce que permettent les systèmes actuels qui en général comportent des unités de traitement susceptibles de travailler plus rapidement dans un format donné, non unitaire, que cellule par cellule. La lecture cellule par cellule s'effectue uniquement dans une paire d'éléments dans laquelle on a détecté la présence possible de la butée. Par ailleurs, lors d'un rechargement, il n'est plus nécessaire de neutraliser les butées créées lors des différentes transactions survenues depuis le rechargement précédent, puisque la neutralisation d'une butée s'effectue juste après la création de la butée suivante, ce qui accroît la sécurité des opérations, car chaque opération ne s'accompagne plus que de la modification de deux cellules : une cellule dans une série d'éléments pour créer la nouvelle butée, et une cellule dans l'autre série pour neutraliser l'unité de transaction constituant la butée précédente. Ceci contribue à diminuer les risques d'erreurs, donc de pertes d'unités.

Les systèmes de l'art antérieur imposaient de neutraliser une cellule dans chaque unité de transaction qui avait été modifiée depuis le rechargement précédent, ce qui augmentait les risques d'erreurs, notamment dans le cas ou pour une raison technique, il était impossible de modifier l'une des cellules. Par ailleurs, la neutralisation imposait une connaissance parfaite de l'état de la mémoire (relecture par exemple), ce qui rendait les opérations complexes.

D'autres caractéristiques et avantages de l'invention apparaîtront avec la description qui va suivre faite en regard des figures annexées sur lesquelles :
- Les figures 1 et 2 illustrent deux variantes possibles pour l'organisation de la mémoire d'un système pour la mise en oeuvre du procédé de l'invention.
- Les figures 3 à 19 illustrent différentes configurations que peut prendre la zone de mémoire réservée à la comptabilisation des unités homogènes prédéterminées lors des différentes phases de fonctionnement (transaction ou rechargement).

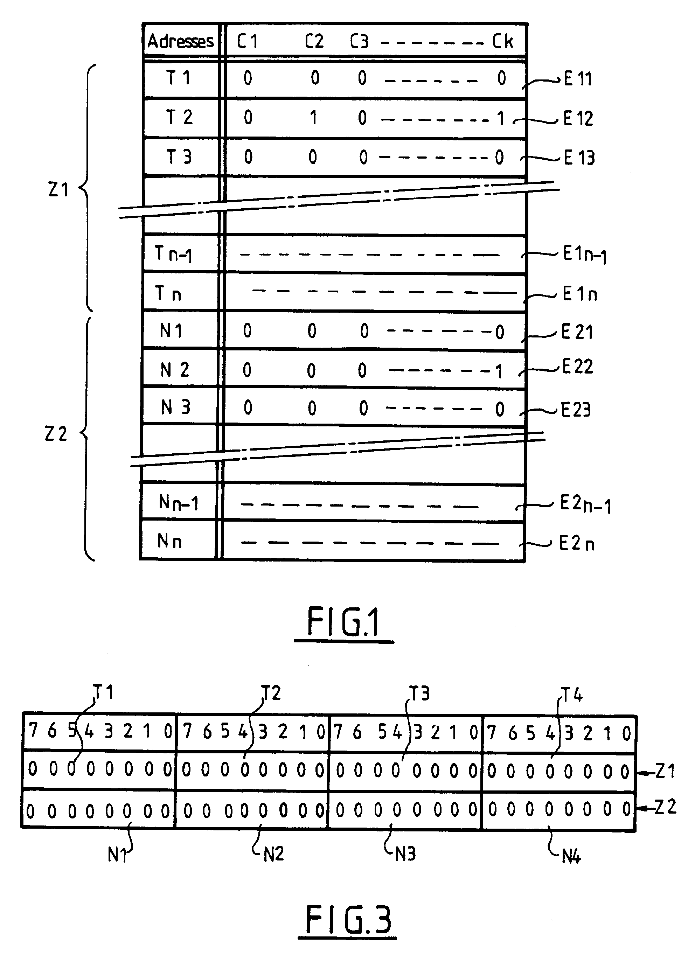

Dans la variante illustrée par la figure 1, les deux séries Z1, Z2 d'éléments comprennent un même nombre n d'éléments ayant chacun un même nombre non unitaire k de cellules (C1, C2....Ck).

La première série Z1 contient par exemple les éléments E11, E12, .... E1n dans lesquels une cellule est modifiée afin de créer la nouvelle butée lors d'une transaction, et la seconde série Z2 contient alors les éléments E21, E22, .... E2n, qui comprennent les cellules dont l'une d'entre elles est modifiée, après une transaction, pour neutraliser la butée précédente.

Chaque élément est répérable en mémoire par son adresse, par exemple, T1, T2, .... Tn pour les éléments de la première série, et N1, N2, .... Nn pour les éléments de la seconde. Par ailleurs, un élément de la première série est apparié avec un élément de la seconde ; ainsi, dans l'exemple, l'élément E11, d'adresse T1, de la première série est apparié avec l'élément E21, d'adresse N1 de la seconde, etc, jusqu'à l'élément E1n, d'adresse Tn de la première série, qui est apparié avec l'élément E2n, d'adresse Nn de la seconde.

Par ailleurs, chaque cellule d'un élément de la première série est appariée avec une cellule déterminée de l'élément correspondant dans la seconde série. C'est chaque paire de cellules ainsi constituée qui forme une unité de transaction. La gestion de la mémoire est effectuée par une unité de traitement structurée autour d'un microprocesseur, et afin de faciliter la tache de ce dernier, une cellule d'un élément d'une série est appariée avec la cellule de poids identique, dans l'élément correspondant de l'autre série.

Ce qui a été illustré en regard de la figure 1 pour la disposition relative des éléments entre eux n'a pas d'autre objet que de faciliter la compréhension du procédé de l'invention. Il est bien entendu qu'une organisation différente pourrait être envisagée, le seul aspect primordial étant que des paires d'éléments soient constituées, et que l'on sache rapidement gérer le système pour reconstituer lesdites paires d'éléments, et que l'on sache également reconstituer rapidement chaque couple de cellules constituant une unité de transaction.

La mémoire pourrait donc être organisée différemment, par exemple comme illustré par la figure 2, sur laquelle les paires d'éléments constituées se succèdent en mémoire, le premier élément E11 de la première série étant à une adresse A1, son correspondant E21 de la seconde série étant à l'adresse A2, le second élément E12 de la première série étant à l'adresse A3, son correspondant E22 de la seconde série étant à l'adresse A4, et ainsi de suite, jusqu'au dernier élément E2n de la seconde série qui est à une adresse Af.

Toutes autres configurations intermédiaires sont envisageables, dès lors qu'elles n'entraînent pas de préjudice notable sur les temps de traitement.

Comme il a été exposé précédemment, tous les éléments contiennent un même nombre non unitaire de cellules mémoire, et la rapidité des temps de traitement est obtenue en allant lire la mémoire élément par élément. Chaque élément comporte un nombre de cellules correspondant au format de traitement de l'unité de gestion associée. En effet, la mémoire, pour être utilisable, doit être associée à une unité de traitement ou de gestion qui peut être, comme déjà indiqué précédemment, un microprocesseur. Ce sera par exemple le cas pour des cartes à mémoire ayant une fonction de porte-monnaie électronique, c'est-à-dire utilisables pour assurer des paiements. Dans un tel cas, le format de traitement sera, par exemple, l'octet qui correspond au format de travail habituel des microprocesseurs incorporés dans les cartes à mémoire, et chaque élément comportera alors huit cellules.

C'est le choix d'une telle structure qui permet un gain de temps considérable lors du traitement, par rapport aux dispositifs de l'art antérieur qui, en raison de leur configuration, imposaient un traitement cellule par cellule. Or, les microprocesseurs connus travaillent plus facilement sur un nombre de cellules correspondant à leur format de travail que cellule par cellule. Dans la suite de la description, les exemples seront illustrés en considérant que le format de travail de l'unité de traitement associé à la mémoire est l'octet, bien que ceci ne soit nullement limitatif, mais puisque ceci correspond à un format couramment employé dans le domaine des cartes à mémoire, qui constitue une mise en oeuvre particulièrement intéressante du procédé de l'invention, pour une application au paiement électronique.

Sur la figure 3, on a représenté l'état à l'origine, d'une partie de la mémoire allouée à la comptabilisation des transactions à l'aide d'unités homogènes prédéterminées. Afin de déterminer aisément la quantité d'unités de transaction disponibles, les éléments sont rangés dans un ordre déterminé pour que l'unité de gestion puisse les lire ou y effectuer des inscriptions en tenant compte du dit ordre pour éviter les erreurs de comptabilisation. Ainsi, par exemple, en se référant aux figures 1 et 3, on constate que les éléments de la première série Z1 sont rangés dans l'ordre de leurs adresses croissantes, de T1 à Tn, de même que les éléments de la seconde série Z2 sont rangés dans l'ordre de leurs adresses croissantes de N1 à Nn. Par ailleurs, la cellule de poids le plus fort de chaque élément est considérée comme la première cellule de l'élément. Dans l'exemple illustré, le poids le plus fort est "7", et le plus faible "0".

Au départ, toutes les cellules sont par exemple dans l'état logique "0", et l'inscription ou le grillage d'une cellule la fait passer à l'état logique "1". Bien entendu, ceci est une question de convention.

Par convention également, on appellera la première série Z1, série des transactions, car c'est dans cette série que sera inscrite la cellule marquant la nouvelle butée lors d'une transaction, et la seconde série Z2 sera appelée série de neutralisation, puisque c'est dans cette série que sera inscrite la cellule de neutralisation de la butée précédente.

Par ailleurs, à la lecture de ce qui a été écrit auparavant, pour la suite de la description, le début de la première série Z1 sera la cellule de poids le plus fort de l'élément d'adresse T1, la fin de cette série étant constituée par la cellule de poids le plus faible de l'élément d'adresse Tn, et le début de la seconde série Z2 sera la cellule de poids le plus fort de l'élément d'adresse N1, sa fin étant la cellule de poids le plus faible de l'élément d'adresse Nn.

Par ailleurs, de préférence, on considèrera qu'une unité de transaction est constituée du couple formé par une cellule de poids donné dans un élément de la série de transaction, et par la cellule de même poids dans l'élément correspondant de la série de neutralisation. Une telle unité est vierge, c'est-à-dire consommable, lorsque ses deux cellules sont dans leur état d'origine, c'est-à-dire ici l'état "0", et elle constitue une butée lorsque sa cellule de la zone de transaction est à l'état logique "1", son autre cellule étant dans son état d'origine, et elle est neutralisée, c'est-à-dire considérée comme logiquement inexistante, lorsque ses deux cellules sont modifiées.

Préalablement à un commencement de transaction sur un système mettant en oeuvre le procédé de l'invention, il faut d'une part réserver une certaine quantité de mémoire ou d'éléments pour la comptabilisation des transactions, c'est-à-dire réserver les deux séries Z1 et Z2, d'autres zones pouvant servir à autre chose (cette réservation peut, on le rappelle, porter sur la totalité de la mémoire). D'autre part, après que la réservation ait été faite, il faut constituer un solde d'unités de transaction car, au départ, le solde, c'est-à-dire le pouvoir de transaction exprimé en unités est nul ; par contre le système possède un pouvoir accréditif, c'est-à-dire un certain nombre d'unités de transaction qu'il est possible d'utiliser pour constituer le solde. Par ailleurs, une transaction s'accompagnera d'un débit d'unités dans la limite du solde, ou d'un crédit d'unités dans la limite du pouvoir accréditif, selon qu'il s'agit d'une consommation ou d'un rechargement.

Sur les figures 3, 5 à 19, on a considéré le cas où la zone allouée à la comptabilisation des unités homogènes comprend 32 unités de transaction, c'est-à-dire est constituée de quatre octets dans la série de transaction et de quatre octets dans la série de neutralisation.

La figure 3 illustre parfaitement la correspondance entre les cellules de chaque élément de la série de transaction, et les cellules de chaque élément de la série de neutralisation, formant les unités de transaction.

A l'origine, on considère que le pouvoir accréditif est égal au nombre d'unités de transaction réservées dans la mémoire, moins une. Dans l'exemple choisi, le pouvoir accréditif est donc de 31 unités de transaction. Au même moment, le solde est nul. Tout débit est donc impossible, tant qu'au moins une opération de crédit n'aura pas été effectuée.

Le fait de considérer qu'à l'origine le pouvoir accréditif est égal au nombre d'unités de transaction réservées, moins une, est particulièrement avantageux, car ceci permet de contribuer au gain de temps lors des transactions. En effet, on constate que, tant qu'aucune opération de crédit n'a été effectuée, toutes les unités de transaction sont dans leur état d'origine et sont disponibles. Une lecture des deux séries à ce moment-là permet de détecter cet état. Si on admettait que le pouvoir accréditif correspond au nombre d'unités de transaction réservées, ceci reviendrait à autoriser qu'un crédit initial pourrait être effectué de façon que le solde avant une première transaction corresponde au nombre d'unités effectivement réservées. Or, la lecture des séries de transaction et de neutralisation ne permettrait pas à l'unité de traitement de détecter si la mémoire est dans un état correspondant à un pouvoir accréditif maximum, ou à un solde maximum. Pour que cette détection puisse avoir lieu, il faudrait alors réserver dans la mémoire une autre zone complémentaire des deux séries Z1, Z2, afin de contrôler qu'une opération de crédit a déjà eu lieu, ce qui obligerait l'unité de traitement à aller lire cette zone de mémoire spécialement réservée, et augmenterait les temps de traitement et compliquerait le procédé de mise en oeuvre, C'est pourquoi, pour simplifier la mise en oeuvre du procédé, on préfère considérer que le pouvoir accréditif de la mémoire vierge est égal au nombre d'unités de transaction réservées, moins une, de façon que lors de la première opération de crédit, on puisse créer au moins une butée réelle sur le dernier couple de cellules situé dans le dernier élément des séries réservées, ce qui revient à dire en d'autres termes que le solde initial peut au maximum être égal au nombre d'unités de transaction réservées moins une.

Le procédé de l'invention est particulièrement avantageux, comme il va être démontré ci-après, dans la mesure où, que ce soit lors d'une opération de débit ou d'une opération de crédit, il entraîne la mise en oeuvre de fonctions identiques, après avoir effectué très rapidement la recherche de la position de la butée. Après que sa position précise ait été détectée, et selon cette position, il peut être possible d'effectuer, soit exclusivement une opération de débit ou exclusivement une opération de crédit, soit l'une ou l'autre de ces opérations. Par exemple, suite à la réservation de zones pour la comptabilisation des transactions, c'est-à-dire dans le cas où aucune opération de crédit n'a encore eu lieu, toute opération de débit est impossible ; seulement une opération de crédit peut avoir lieu.

Il peut encore arriver le cas où le solde est maximum, c'est-à-dire lorsque la butée est détectée sur la dernière unité de transaction disponible : dans ce cas, seulement un débit peut avoir lieu.

Enfin, il peut arriver des cas où la butée est détectée ailleurs dans la zone, et dans ce cas il peut être possible d'autoriser soit des opérations de débit, soit des opérations de crédit. Dans un tel cas, le refus d'une opération de débit ou d'une opération de crédit pourra par exemple être motivé par le fait que l'opération porte sur une transaction mettant en jeu un nombre d'unités de transaction supérieur au débit ou au crédit autorisé.

Ainsi, un débit ou un crédit ne pourra être autorisé que si l'état de la mémoire est compatible avec le montant de la transaction envisagée.

Conformément à l'invention, afin de détecter rapidement la position de la butée, le dispositif de traitement associé à la mémoire est agencé pour faire une opération logique entre le contenu de chaque élément de la série de transaction, et son équivalent dans la série de neutralisation. L'opération logique choisie donne un résultat particulier au cas où la butée est détectée dans une paire d'éléments donnés. Lorsqu'un résultat indique que la butée est présente dans une paire d'éléments, alors sa position précise dans ladite paire d'éléments est recherchée, par exemple en venant lire toutes les cellules de l'élément de ladite paire, situé en série de transaction, jusqu'à trouver une cellule modifiée par rapport à son état initial dans cet élément, puis en allant vérifier si ladite cellule modifiée appartient à la butée ou non. En effet, il peut arriver qu'une cellule modifiée en première série appartienne à la butée ou à une unité neutralisée.

La seule détection d'une cellule modifiée, dans un élément de la première série, ne suffit donc pas à affirmer que cette cellule appartient à la butée. Dans le cas d'une butée, la cellule correspondante dans l'élément en seconde série Z2 n'est pas modifiée par rapport à son état d'origine, alors que dans le cas d'une unité neutralisée, ladite cellule correspondante est modifiée. Il faut donc déterminer si la cellule correspondante de l'élément correspondant de la seconde série est modifiée ou non pour savoir si ladite cellule appartient à une unité neutralisée ou à la butée.

Dans la pratique, la recherche de la paire d'éléments dans laquelle se trouve l'unité de transaction correspondant à la butée s'effectue par exemple en comparant successivement, dans l'ordre de leurs adresses croissantes, chaque élément de la série de transaction, avec l'élément correspondant de la série de neutralisation.

En effet, on constate, en comparant les éléments de chaque série, constitutifs d'une même paire que, dans le cas où la butée existe, alors l'élément de la première série est différent de son correspondant dans la seconde série.

C'est ce que la figure 4 illustre, avec une configuration que peut prendre à un moment donné la mémoire qui serait composée, pour ne pas surcharger, de quatre paires d'éléments constitués chacun par un quartet de cellules. La partie supérieure de la figure représente le contenu de la première série Z1 qui peut correspondre à la série de transaction, la partie intermédiaire représente la seconde série Z2 qui peut être la série de neutralisation et la partie inférieure représente les résultats R1 à R4 d'une comparaison qui serait appliquée sur chaque paire d'éléments, et donnerait un résultat positif au niveau des éléments contenant la butée. La paire P1 d'éléments est constituée exclusivement de cellules dans leur état d'origine. La paire P2 contient deux unités de transaction disponibles (état 0,0) et deux unités de transaction neutralisées (état 1,1). La paire P3 contient deux unités de transaction disponibles, une unité neutralisée et la butée B. La paire P4 contient exclusivement des unités de transaction neutralisées.

Dans un mode de mise en oeuvre particulièrement avantageux, la comparaison entre un élément de la première série Z1, et son correspondant dans la seconde Z2, est effectuée en appliquant la fonction "OU EXCLUSIF" entre lesdits éléments.

En effet, dans le cas où les deux éléments considérés sont différents, c'est-à-dire lorsqu' ils renferment la butée, alors le résultat de l'application de la fonction "OU EXCLUSIF", entre ces éléments, est différent de celui qui apparaît lorsque les éléments renferment seulement des unités de transaction disponibles et/ou neutralisés.

En outre, des fonctions logiques simples, comme le "OU EXCLUSIF" sont généralement disponibles sur les unités de traitement actuelles telles que les microprocesseurs. Comme il a été exposé auparavant, des unités de traitement actuelles possèdent un format de travail non unitaire, qui correspond par exemple à l'octet, c'est-à-dire qu'il est possible d'appliquer des fonctions comme le "OU EXCLUSIF" entre des mots binaires, constitués chacun par huit cellules. D'autres formats peuvent être utilisés.

On remarque donc, qu'en travaillant élément par élément, on gagne un temps considèrable par rapport aux procédés de l'art antérieur, qui impliquaient un travail cellule par cellule.

On peut remarquer enfin que la fonction "OU EXCLUSIF" est particulièrement avantageuse à employer car elle s'applique aussi bien dans les cas où l'état d'origine des cellules est le niveau logique "0" ou bien dans les cas où cet état d'origine est le niveau logique "1".

Lorsqu'une paire d'éléments renfermant la butée a été détectée, face à la comparaison entre chaque élément de la première série Z1, et le correspondant dans la seconde série Z2, alors la position précise de la butée est recherchée dans cette paire d'éléments, comme il a été exposé auparavant, en venant lire toutes les cellules de l'élément de ladite paire, situé en série de transaction Z1, puis dès qu'une cellule du dit élément est détectée comme modifiée par rapport à son état d'origine, en allant voir si la cellule correspondante dans l'élément de ladite paire, situé en série de neutralisation Z2, est modifiée ou non, pour déterminer si la cellule modifiée en série de transaction appartient à une unité de transaction neutralisée ou à la butée.

Dans une variante, au niveau de ladite paire d'éléments ayant été détectée comme contenant la butée, au lieu d'aller lire une cellule de la série de neutralisation seulement lorsque la correspondante en série de transaction a été détectée comme ayant été modifiée par rapport à son état d'origine, afin de déterminer si cette cellule en série de neutralisation est également modifiée ou non, on vient lire, dans ladite paire d'éléments, systèmatiquement chaque cellule de la série de transaction et sa correspondante dans la série de neutralisation, jusqu'à détecter un couple de cellules, dont la cellule en série de transaction est modifiée, alors que la cellule en série de neutralisation ne l'est pas.

Cette variante n'augmente pas la sécurité de la vérification, mais peut être plus simple à mettre en oeuvre avec certains types particuliers d'unités de traitement.

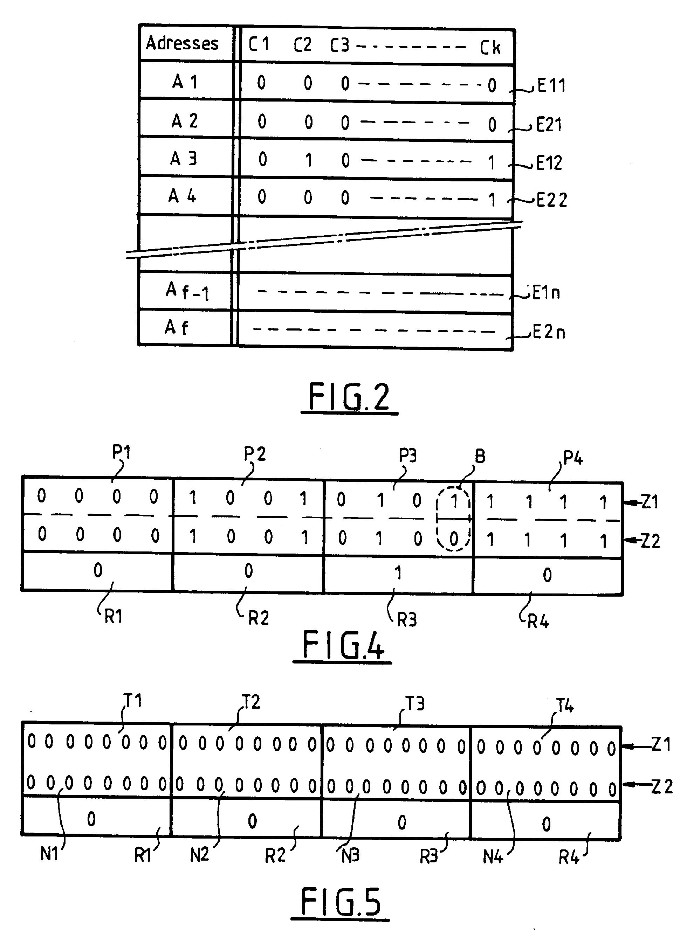

La figure 5 illustre ce que donnerait une comparaison entre les éléments correspondants de la mémoire dans son état d'origine, telle que représentée sur la figure 3. Dans ce cas, chaque paire d'éléments entraînerait l'apparition d'un résultat logique de niveau "0". La lecture de ces résultats, en partant du début de la zone et en allant jusqu'à la fin ne permettrait pas de détecter la présence d'une butée de sorte que l'unité de traitement serait amenée à considérer que la mémoire est dans son état d'origine et que seule une opération de crédit, afin de constituer un solde, est possible. Sur la figure 5, le résultat R1 est celui de la comparaison entre l'élément de la série de transaction situé en adresse T1 et l'élément correspondant de la série de neutralisation situé en adresse N1 et ainsi de suite jusqu'au résultat Rn de la comparaison entre les éléments d'adresse Tn dans la série Z1 de transaction, et ceux d'adresse Nn dans la série Z2 de neutralisation.

Dans une réalisation pratique, des circuits de comparaison cellule par cellule ou élément par élément sont aisément réalisables avec des circuits logiques classiques, ou bien encore ces fonctions peuvent être réalisées à l'aide d'un microprocesseur dont le mode de fonctionnement est adapté. Ainsi, dans le cas d'une carte à mémoire incorporant une mémoire pour la gestion des unités homogènes prédéterminées, par exemple en vue du paiement, et un microprocesseur pour la gestion de cette mémoire, alors il sera possible de configurer le microprocesseur pour réaliser l'une et/ou l'autre de ces fonctions, selon le choix qui aura été fait pour déterminer la position de la butée.

Ce qui va suivre illustre les différents cas qui peuvent se présenter au cours de la vie d'un système mettant en oeuvre le procédé de l'invention.

Comme il a été dit précédemment, avant une première opération de crédit, c'est-à-dire lorsque la zone mémoire allouée à la comptabilisation ne contient que des cellules dans leur état d'origine, la recherche de la butée ne permet de détecter sa présence dans aucun des éléments. Le système mettant en oeuvre le procédé considère alors qu'il existe une butée fictive qui précède la zone mémoire allouée à la comptabilisation. Dans ce cas, seul le crédit est possible, et une opération de crédit est effectuée en déplaçant la butée fictive du début de la zone mémoire vers la fin, dans la limite du pouvoir accréditif. Dans ce cas particulier d'un premier crédit, il n'existe pas encore d'unités de transaction qui ont été neutralisées. Cependant, d'une façon générale, le système doit vérifier qu'il n'existe pas de telles unités neutralisées, et le positionnement de la nouvelle butée consiste à laisser disponibles autant d'unités de transaction entre l'ancienne butée, dans ce cas-là fictive, et la nouvelle butée. Ainsi, sur une opération de crédit portant sur k unités, l'unité de gestion compte k unités de transaction disponibles et positionne la butée sur la k + 1ème unité disponible rencontrée. L'inscription de la butée s'effectue en modifiant l'état de la cellule de transaction du couple qui doit constituer la butée. Dans ce cas particulier d'un premier crédit, il n'existe pas de neutralisation de la butée précédente puisqu' elle était fictive.

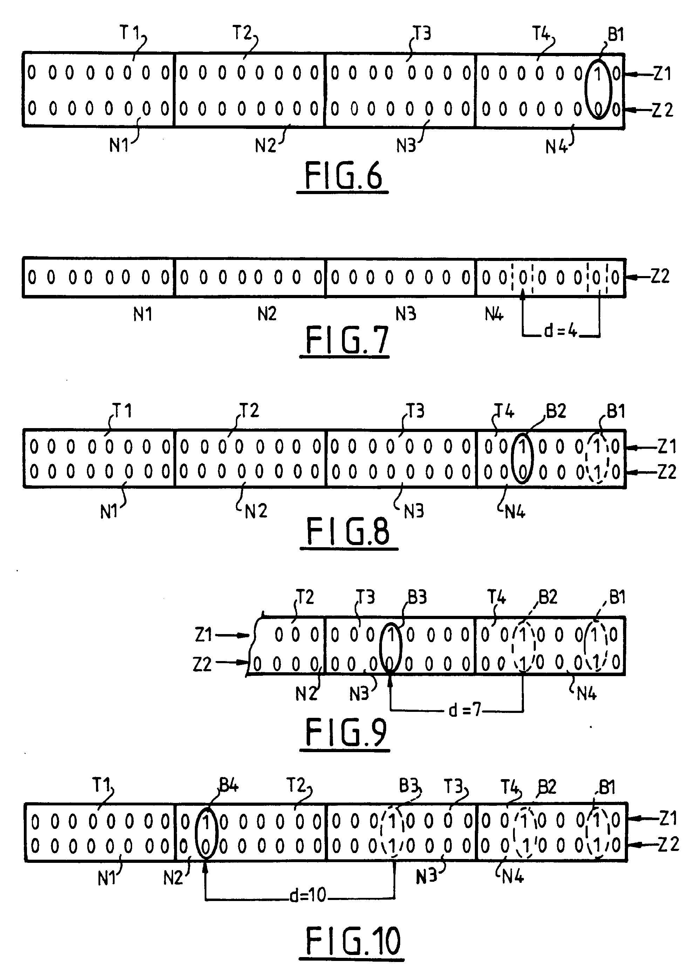

La figure 6 illustre l'état d'une mémoire contenant 32 unités de transaction réparties en éléments constitués d'octets. La série de transaction contient quatre octets, d'adresses T1, T2, T3, T4, et la série de neutralisation contient également quatre octets, d'adresses N1, N2, N3, N4. Le crédit a porté sur 30 unités, et on constate que la butée B1 été positionnée sur la 31ème unité de transaction par modification de la cellule de transaction correspondante.

Dans ce cas particulier, la mémoire est disponible pour des opérations de débit, son solde est de 30 unités de transaction et son pouvoir accréditif est de 0 car il ne reste plus qu'une unité de transaction entre la butée B1 créée et la fin de la zone. Comme il a été expliqué précédemment, afin de simplifier les opérations de gestion du porte-monnaie, ce dernier élément de transaction ne pourra servir qu'à la constitution d'une butée, car il n'est pas possible de considérer l'existence d'une butée fictive au-delà de la fin de la zone puisqu'il faudrait réserver une autre zone de la mémoire pour indiquer au système qu'il existe une telle butée fictive. Ceci compliquerait les opérations de gestion, puisqu'il faudrait que systématiquement l'unité de gestion aille lire l'état de cette zone indiquant s'il existe ou non une butée fictive.

D'une façon générale, le pouvoir accréditif est constitué par le nombre d'unités de transaction disponibles moins une situées entre la dernière butée positionnée et la fin de la zone.

Une opération de débit consiste à déplacer la butée vers le début de la zone mémoire allouée à la comptabilisation des transactions. La première opération réalisée est la recherche de la butée telle qu'elle a été décrite précédemment, par une comparaison des éléments paire par paire, puis une recherche précise de sa position dans la paire d'éléments dans laquelle la butée aura été détectée.

Après cette détection de la butée, l'opération de débit consiste à créer une nouvelle butée entre la précédente et le début de la zone. Ceci doit se faire dans la limite du solde en tenant compte des unités éventuellement neutralisées lors des opérations précédentes. Comme il a été expliqué précédemment, le fait qu'un élément soit neutralisé se traduit par la présence d'une cellule modifiée par rapport à son état d'origine dans la série des éléments de neutralisation. Ainsi, pour déplacer la butée, l'unité de gestion associée à la mémoire compte le nombre de cellules de la série des éléments de neutralisation qui n'ont pas été modifiés, en sautant éventuellement par-dessus celles qui ont été modifiées, et lorsqu'un nombre de cellules correspondant au nombre d'unités à débiter pour la transaction a été compté, l'unité de gestion vient modifier l'état de la cellule de transaction couplée avec la dernière cellule de la série de neutralisation qui a été comptée.

La figure 7 illustre ce comptage dans la série des éléments de neutralisation : l'unité de gestion compte à partir de la cellule de neutralisation de la dernière butée un nombre de cellules non modifiées, et vient pointer sur la dernière cellule décomptée. Dans le cas illustré par la figure 7, le comptage porte sur quatre unités. Suite à la création de la nouvelle butée, l'unité de gestion modifie l'état de la cellule située en série Z2 de neutralisation de la précédente butée, de sorte que la mémoire, après l'opération de débit et de neutralisation prend une configuration telle qu'illustrée par la figure 8. La 31ème unité de transaction qui correspondait à la butée précédente B1 est neutralisée, et la 27ème unité de transaction constitue la nouvelle butée B2 après un débit de quatre unités. Le solde est alors de 26 unités et le pouvoir accréditif de 3 unités.

De préférence, le système est agencé pour que les opérations de crédit et de débit ne puissent être répétées lorsque le nombre d'unités neutralisées est trop important, limitant le pouvoir accréditif et rendant le système difficilement exploitable. Dans ce cas, soit on alloue une nouvelle zone mémoire dans un autre dispositif, ou bien encore, s'il reste une zone mémoire disponible dans le système utilisé, alors on réserve une autre zone pour permettre la comptabilisation d'unités homogènes.

La figure 9 illustre l'état de la mémoire après un nouveau débit de sept unités. La recherche de la position de la nouvelle butée B3 s'est effectuée en comptant le nombre de cellules non modifiées de la série de neutralisation depuis la précédente butée B2. Dans le cas d'espèce puisque le système est encore dans une phase où il n'y a pas eu de rechargement, toutes les cellules de la série de neutralisation qui ont été rencontrées en lecture depuis la dernière butée étaient dans leur état initial et il n'y a donc pas eu à faire de décalage tenant compte des unités de transaction qui auraient été annulées précédemment. On constate également sur cette figure que la butée précédente B2 a été annulée après le positionnement de la nouvelle butée (état de ses cellules à 1,1).

La figure 10 illustre l'état de la mémoire après un nouveau débit portant cette fois ci sur dix unités. Là encore, la recherche de la position de la nouvelle butée B4, après détection de l'ancienne B3, en comptant le nombre de cellules non modifiées de la série de neutralisation située en avant de la position de la butée précédente B3 n'a pas permis de détecter de cellules modifiées auparavant, ce qui entraîne que le débit s'accompagne du positionnement de la nouvelle butée B4 sur la dixième unité de transaction rencontrée à partir de la dernière butée, dans la zone de solde.

Après cette opération, le solde est de neuf unités et le pouvoir accréditif de 18 unités.

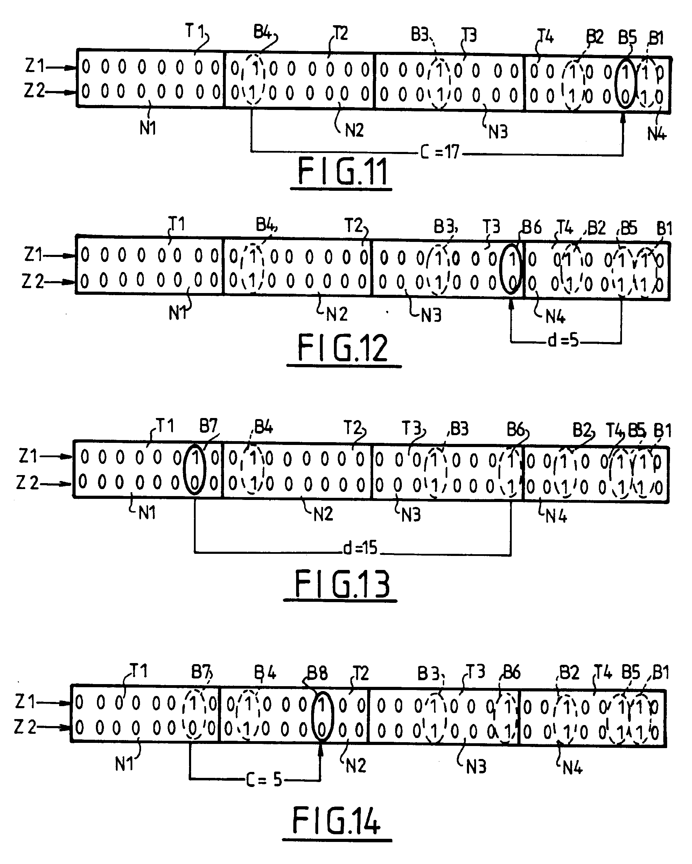

La figure 11 illustre l'état de la mémoire suite aux opérations de débit précédentes et à un crédit de 17 unités.

Une première phase a consisté à rechercher la position de la butée B4. Cette recherche a permis de déterminer l' adresse de l' élément de la série de neutralisation et le poids de la cellule de cette série correspondant à la butée B4, de façon à réaliser l'opération de crédit à partir de ladite butée. Comme pour un débit, le crédit consiste à comptabiliser des cellules de la série de neutralisation, situées entre la butée détectée B4 et la fin de cette série, qui n'ont pas été modifiées lors des opérations précédentes. En effet, chaque cellule de la série de neutralisation détectée comme ayant été modifiée par rapport à son état d'origine signifie la présence d'un élément de transaction neutralisé, donc inutilisable. Le crédit consiste à laisser libre entre la butée précédente B4 et la nouvelle butée B5 autant d'unités de transaction que d'unités sur lesquelles porte le crédit.

Dans l'exemple illustré, le comptage de 17 cellules non modifiées de la zone de neutralisation à conduit à rencontrer deux cellules modifiées lors des deux dernières opérations de débit, respectivement la quatrième cellule de l'élément de neutralisation d'adresse N3 qui avait été inscrite lors de la neutralisation de la butée B3, et la troisième cellule de l'élément de neutralisation d'adresse N4 qui avait été neutralisé lors de l'avant-dernière opération de débit (butée B2). La nouvelle butée B5 est alors constituée sur les sixièmes cellules des éléments de transaction d'adresse T4 et de neutralisation d'adresse N4.

Une opération de crédit portant sur 18 unités au lieu des 17 illustrées par la figure 11 aurait conduit à positionner la butée sur les dernières cellules des éléments d'adresse T4 et N4, et un crédit supérieur à 18 unités aurait été impossible dans le cas illustré.

Après le positionnement de la nouvelle butée B5, l'unité de transaction correspondant à la précédente butée B4 est annulée en modifiant l'état de la cellule de neutralisation de cette unité.

La figure 12 illustre l'état de la mémoire après un nouveau débit de cinq unités consécutif au crédit de dix-sept illustré par la figure 11. La recherche de la butée conduit à détecter la dernière butée B5 positionnée après le crédit, et le comptage des cellules de neutralisation non modifiées, entre la butée et le début de la série, afin de parvenir à détecter la position de la nouvelle butée à positionner, amène à détecter une cellule de neutralisation modifiée, correspondant à la butée B2, de sorte que le positionnement de la nouvelle butée B6 a tenu compte de cette cellule modifiée rencontrée lors du comptage.

A la lecture de ce qui précède, on constate que le procédé conforme à l'invention permet une grande transparence des opérations, car le positionnement d'une nouvelle butée est systèmatiquement accompagné de la neutralisation de l'unité de transaction constituant la butée précédente, de sorte qu'au moment d'un rechargement notamment, il n'est plus besoin, comme dans les procédés mis en évidence par l'art antérieur, de relire toute la mémoire pour venir neutraliser les éléments utilisés, ou bien encore pour les rendre à nouveau disponibles comme c'est le cas dans la demande de brevet français précité. En tenant compte du contenu de la série de neutralisation, on évite les erreurs lors du comptage des unités pour positionner la nouvelle butée, et la neutralisation systèmatique suite à la création d'une nouvelle butée permet d'obtenir des temps de rechargement, c'est-à-dire les temps nécessaires à une opération de crédit, beaucoup plus rapides que dans la mise en oeuvre des procédés de l'art antérieur. Un débit ou un crédit entraîne systèmatiquement la mise en oeuvre des mêmes opérations, la seule différence venant du fait que le déplacement de la butée dans la mémoire ne s'effectue pas dans le même sens.

Cependant, si le fait de neutraliser les unités de transaction ayant constitué une butée lors de la création de la butée suivante permet d'obtenir une grande sécurité au moment d'une opération de crédit, sans avoir à mettre en oeuvre des procédés de gestion compliqués, il peut arriver qu'un système pour la mise en oeuvre du procédé de l'invention ne fonctionne pas correctement, et qu'en particulier, il soit impossible de modifier l'état d'une cellule de transaction lors de la création d'une nouvelle butée ou bien encore l'état d'une cellule de neutralisation lors de la tentative de neutralisation de la butée précédente, suite à la création d'une nouvelle butée.

De tels types de défaillances doivent être pris en compte pour garantir qu'il n'y aura aucune déperdition d'unités lors des transactions, ce qui peut être particulièrement préjudiciable lors de l'utilisation d'une telle mémoire en porte-monnaie électronique. En effet, un mauvais fonctionnement de la mémoire entraîne des déperditions de monnaie.

Un premier type de dysfonctionnement qui peut survenir est l'impossibilité de modifier l'état de la cellule de neutralisation de la butée précédente, après la création d'une nouvelle butée.

Ceci peut se produire après une opération de débit. Dans ce cas, l'ancienne butée est située entre la nouvelle et le fond de la zone affectée aux transactions. Ceci est illustré par la figure 13 qui reprend l'état précédent de la mémoire illustrée sur la figure 12 à laquelle on a voulu faire subir un débit de quinze unités. La nouvelle butée B7 se trouve donc située sur les cellules de septième rang des éléments d'adresse T1 et N1, alors que la précédente B6 est située sur les huitièmes cellules des éléments d'adresse T3 et N3. C'est cette dernière butée B6 qui n'est pas neutralisable, car sa cellule de neutralisation ne peut pas être modifiée. Dans ce cas, on considère que la nouvelle butée B7 placée dans les éléments d'adresse T1 et N1, suite au débit, indique la limite actuelle du solde, alors que l'ancienne butée qui n'est pas neutralisable sera considèrée par la suite comme limite du pouvoir accréditif de la mémoire. Dans ce cas, le nouveau solde est égal à six unités et le pouvoir accréditif est réduit à treize unités alors que si la butée de la transaction précédente B6 avait pu être annulée, il aurait été de dix sept unités.

Ainsi, dans un tel cas, l'impossibilité de neutraliser la butée correspondant à une transaction précédente se traduit par une réduction du pouvoir accréditif de la mémoire. En effet, on considère que l'ancienne butée constitue le nouveau fond de la mémoire.

La figure 14 illustre le cas où il est impossible de neutraliser la butée précédente après une tentative de crédit.

L'exemple illustré part de la figure 13 sur laquelle la butée précédente B7 était placée sur les cellules de septième rang des éléments d'adresse T1 et N1. La tentative de crédit porte par exemple sur cinq unités, de sorte que la nouvelle butée B8, en tenant compte des unités neutralisées rencontrées, est située sur les sixièmes cellules des éléments d'adresse T2 et N2. Cependant, en cas d'impossiblité de modifier l'état de la cellule de neutralisation de la butée précédente lors d'une telle tentative de crédit, le système refuse la tentative et on considère alors que l'ancienne butée constitue la limite de la zone mémoire allouée aux transactions, donc au pouvoir accréditif. En d'autres termes, comme dans le cas précédent, l'ancienne butée qui ne peut être franchie, devient la nouvelle limite de la zone réservée.

Un autre type de dysfonctionnement peut consister en l'impossibilité de modifier l'état d'une cellule de transaction. Dans ce cas, il faut à tout prix ne pas refuser la transaction, puisque le solde autorise une telle opération, et ceci uniquement pour la simple raison que le système de mémorisation ne fonctionne pas correctement. Pour remédier à un tel inconvénient en cours d'utilisation d'un système mettant en oeuvre le procédé de l'invention, on a prévu une méthode de sécurisation dont le principe est le même selon que l'impossibilité de griller une cellule de transaction fait suite à une opération de débit ou à une opération de crédit.

Le principe de cette méthode est de créer la butée sur l'unité de transaction disponible de rang immédiatement supérieur, en direction du fond de la mémoire, à celui auquel la butée aurait dû être créée. Dans le cas d'un débit, en aucun cas, on ne pourra constituer une butée décalée au-delà de l'ancienne butée, vers le fond de la mémoire. Dans le cas d'un crédit, la limite possible du décalage sera le fond de la mémoire. Cependant, ce décalage de la butée, s'il n'est suivi d'aucune autre opération, a pour effet d'augmenter le solde d'une unité. Afin de conserver une valeur correcte au solde, alors après la création de la butée dans un rang décalé, on neutralise une unité de transaction disponible dans la zone du solde, c'est-à-dire dans la partie de la mémoire allouée aux transactions située entre le début de la zone mémoire, tel qu'il a été défini, et la nouvelle butée.

Après la création de la butée décalée et la neutralisation de cette unité, on vient neutraliser la butée précédente.

En cas d'impossibilité de neutraliser la butée précédente, c'est-à-dire de modifier sa cellule de neutralisation, alors on est ramené au problème qui a été exposé auparavant, c'est-à-dire que l'on considère une réduction du pouvoir accréditif qui se trouve limité par la butée précédente.

Plus précisément, l'opération de création d'une butée décalée, consécutive à une impossiblité de créer une butée sur la paire de cellules sur laquelle elle aurait dû être créée, peut être décomposée en plusieurs phases :
- une première phase consiste donc à déterminer quelle unité de transaction de rang immédiatement supérieur à celui auquel la butée aurait dû être créée, est disponible ;
- la deuxième phase consiste à griller la cellule de transaction de l'unité de transaction choisie pour constituer la butée décalée ;
- une troisième phase consiste à griller la cellule de neutralisation d'une unité disponible située dans la zone représentative du solde, c'est-à-dire dans la partie de la mémoire située entre son début et la nouvelle butée créée. Ceci permet de compenser le décalage de la butée et de conserver un solde équivalent à ce qu'il aurait dû être ;
- une quatrième phase consiste à griller la cellule de transaction correspondant à la cellule de neutralisation grillée lors de la troisième phase, afin que l'unité de transaction qui était auparavant disponible dans la zone du solde soit totalement neutralisée, ceci pour simplifier les transactions ultérieures ;
- la cinquième phase consiste à neutraliser la butée précédente, en modifiant l'état de son élément de neutralisation.

Il peut arriver que dans la mise en oeuvre de cette méthode, la cellule de transaction correspondant à la cellule de neutralisation modifiée pour compenser le décalage de la nouvelle butée ne puisse pas être modifiée à son tour. Il s'ensuit que, dans le cas où par exemple l'état initial des cellules est l'état logique "0", l'unité de transaction disponible dans la zone du solde, dont la cellule de neutralisation aurait été modifiée, possède alors la configuration suivante : cellule de transaction à l'état logique "0" et cellule de neutralisation à l'état logique "1".

Or, l'opération du "OU EXCLUSIF" permettant de détecter la butée (qui on le rappelle possède la configuration suivante : cellule de transaction à l'état logique "1" et cellule de neutralisation à l'état logique "0") ainsi qu'il a été exposé auparavant, amenerait le dispositif de gestion de la mémoire à considérer qu'il existe une différence entre l'élément de transaction et l'élément de neutralisation correspondant, de sorte qu'il pourrait considérer que cette différence vient de la présence d'une butée. Cependant, dans la recherche précise du rang de la butée dans ces éléments, le système détecterait que le résultat de la comparaison entre les deux éléments est dû au fait qu'il existe cette configuration "0,1" qui doit être considérée comme différente de la configuration "1,0" effectivement indicatrice de la présence d'une butée.

Donc, pour résumer, lorsque la comparaison entre un élément de la série de transaction et son correspondant dans la' série de neutralisation permet de détecter une différence, ceci peut être dû au fait que la butée est présente dans ces éléments, ou bien encore qu'il existe une unité de transaction dont la cellule de neutralisation a été modifiée pour compenser la création d'une butée décalée, et dont il a été impossible de modifier l'état de la cellule de transaction correspondante. Au moment de la recherche de la paire de cellules ayant entraîné un tel résultat sur la comparaison, il convient de voir si c'est la cellule de transaction qui a été modifiée, et de considérer dans ce cas qu'il s'agit d'une butée, ou bien encore si c'est la cellule de neutralisation seulement qui a été modifiée, et il faut donc aller voir ailleurs pour trouver la butée.

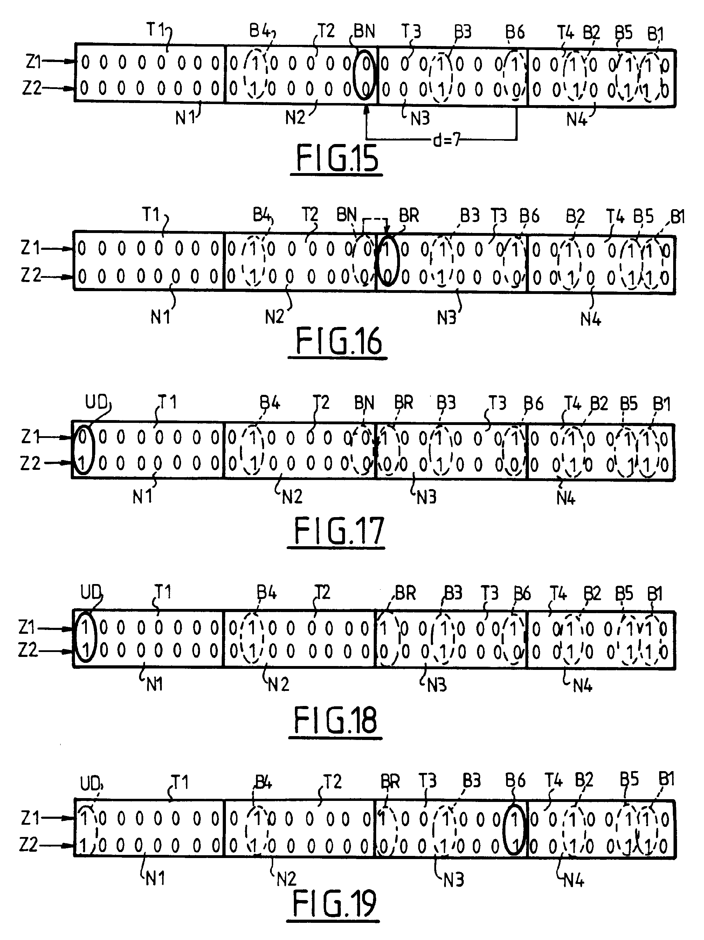

Les figures 15 à 19 illustrent la méthode décrite, appliquée à l'impossibilité de créer une nouvelle butée à l'emplacement souhaité lors d'une opération de débit.

La figure 15 illustre l'état de la mémoire avant cette opération. La butée précédente B6 est constituée, dans l'exemple, par l'unité de transaction située au huitième rang des éléments d'adresses T3 et N3. Il s'agit de la butée positionnée en illustration de la figure 12. Par ailleurs, les quatrième cellules de ces éléments d'adresses T3 et N3 sont modifiées par rapport à l'état d'origine, constituant une unité de transaction neutralisée (butée B3). L'opération de débit souhaitée porte sur sept unités, de sorte que la nouvelle butée BN devrait être créée sur la huitième unité de transaction, constituée par les cellules de huitième rang des éléments d'adresses T2 et N2. Après que le système de gestion associé à la mémoire ait détecté l'impossiblité de griller la cellule de transaction qui aurait dû l'être, il recherche l'unité de transaction immédiatement disponible située entre l'unité sur laquelle aurait dû être créée la nouvelle butée et l'ancienne butée dans le cas particulier d'un débit. Dans le cas d'espèce, cette unité disponible est constituée par les cellules de premier rang, des éléments d'adresses T3 et N3. Le système de gestion vient donc modifier l'état de la cellule de premier rang de l'élément de transaction d'adresse T3, de façon à constituer la nouvelle butée BR, ainsi qu'illustré par la figure 16.

Ensuite, le système de gestion vient rechercher une unité disponible UD située dans la zone du solde, c'est-à-dire, dans l'exemple illustré, la zone constituée par les éléments d'adresses T1, N1, T2, N2, puis vient modifier l'état de la cellule de neutralisation de l'un de ces éléments disponibles. Afin de simplifier les traitements, de préférence, lors d'une opération de débit, le système est agencé pour modifier l'état de la première unité disponible UD rencontrée en lecture depuis le début de la zone. Dans le cas d'espèce, la première unité disponible depuis le début de la zone est constituée par les cellules de premier rang des éléments d'adresses T1 et N1, de sorte que, dans la figure illustrée, c'est la première cellule de neutralisation de la zone de mémoire allouée aux transactions qui est modifiée.

Sur la figure 18, on a illustré la modification suivante, qui porte sur la cellule de transaction correspondant à la cellule de neutralisation modifiée lors de la phase précédente, c'est-à-dire, dans le cas illustré, la première cellule de transaction rencontrée en lecture dans la série des éléments de transaction.

Enfin, après cette opération, le système de gestion associé à la mémoire vient neutraliser la butée précédente B6, en modifiant l'état de sa cellule de neutralisation. Ceci est illustré par la figure 19.

On constate, en consultant ces différentes figures que le solde restant après ces diverses opérations est identique à ce qu'il aurait dû être si la transaction avait été réussie dès le début, c'est-à-dire s'il avait été possible de constituer la butée à l'emplacement souhaité. Par contre, l'artifice choisi pour compenser cette impossibilité de créer la butée à l'emplacement souhaité entraîne simplement une diminution du pouvoir accréditif, ce qui n'est d'aucune espèce d'importance pour la comptabilisation des transactions.

Afin de généraliser, on voit que l'impossibilité de réaliser la butée correspondant à un débit de d unités conduit à réaliser une consommation de d - 1 unités puis à neutraliser une cellule dans la zone du solde.

En parallèle, l'impossibilité de placer une nouvelle butée, lors d'une opération de crédit de c unités, entraînera la constitution de la nouvelle butée à une position correspondant à un crédit de c + 1 unités, puis la neutralisation d'une unité de transaction laissée dans la zone du solde, afin d'effectuer la compensation, puis la neutralisation de la butée précédente.

Dans ce cas particulier du crédit, l'unité neutralisée pour la compensation est choisie parmi les unités de transaction disponibles entre la butée précédente et la nouvelle butée. La butée précédente se trouve bien entre le début de la zone et la nouvelle butée, de sorte qu'il en est de même pour l'unité choisie pour effectuer la compensation.

Cet artifice a pour but d'éviter une perte de solde au cas où il serait impossible de neutraliser la butée précédente, ce qui amenerait à refuser l'opération de crédit, et à considérer que la butée précédente est la limite du solde, comme il a été expliqué auparavant.

Or, après le refus d'une opération de crédit, le solde doit être le même qu'avant la tentative.

Or, si une unité de transaction était neutralisée, pour la compensation, entre le début de la zone et l'ancienne butée alors, dans un tel cas d'impossibilité d'une neutralisation de la butée précédente, suivi d'un refus de la transaction, il apparaîtrait une diminution du solde, due à la neutralisation de l'unité de compensation, laquelle diminution serait préjudiciable à l'utilisateur du dispositif.

En variante, dans le cas particulier des tentatives de crédit, on prévoit que la neutralisation d'une unité de transaction correspondant à un décalage dû à l'impossibilité de positionner la nouvelle butée à l'emplacement souhaité, est effectuée après que la tentative de neutralisation de la butée précédente est été réussie. S'il est impossible de neutraliser la butée précédente, alors l'opération de crédit est refusée. Par contre, s'il est possible de neutraliser la butée précédente, alors il est possible de choisir n'importe quelle unité de transaction disponible, située entre le début de la zone et la nouvelle butée, afin de la neutraliser pour effectuer la compensation due au décalage de la nouvelle butée.

Cette variante présente l'avantage que, d'une part, on n'effectue aucune opération inutile, puisque la neutralisation d'unités disponibles, afin d'effectuer une compensation, n'est réalisée que s'il a été possible de neutraliser la butée précédente, après la création de la nouvelle butée, et d'autre part, ceci simplifie sensiblement la réalisation d'un dispositif pour la mise en oeuvre du procédé de l'invention, car il n'est pas nécessaire de tenir compte de l'emplacement de l'ancienne butée pour choisir une unité de transaction disponible afin de la neutraliser pour la compensation.

Bien entendu, il est également possible de choisir cette variante dans le cas d'un dysfonctionnement lors de la tentative d'inscription d'une nouvelle butée lors d'un débit, à savoir que la tentative de neutralisation de la butée précédente est effectuée avant la neutralisation d'une unité de transaction disponible dans la zone du solde, afin d'effectuer la compensation.

De préférence, lorsque cette seconde variante est utilisée pour remédier aux dysfonctionnement lors des tentatives de crédit, alors elle est également choisie pour remédier au dysfonctionnement pendant les tentatives de débit, afin de simplifier les processus de mise en oeuvre dans les différents cas de figure.

Il est bien entendu que le signe des opérations dépend de la convention qui a été choisie au début, qui consiste à se référer constamment au début de la zone, et à considérer que l'ordre croissant des cellules part des premières cellules des éléments d'adresses T1 et A1, pour se terminer sur les dernières cellules des éléments d'adresses T4 et N4 dans l'exemple illustré. Le sens positif est donc le sens de la lecture de la zone à partir de son début. Il est bien entendu que ceci pourrait être modifié sans aucune importance sur les résultats des transactions.

Il peut encore arriver, lors d'un crédit ou d'un débit, des cas où il serait impossible de créer la butée décalée à l'emplacement choisi, soit parce que, dans le cas d'une impossibilité de créer une butée suite à une opération de crédit, la position décalée dépasserait les limites de la zone : dans ce cas l'opération de crédit serait refusée, ou bien encore parce que après un ordre de décalage faisant suite à une impossibilité de modifier l'état d'une cellule de transaction, il devient également impossible de modifier également l'état de la cellule de transaction correspondant à l'unité de transaction choisie pour constituer la butée décalée, pour une raison inhérente à la mémoire.

Dans ce cas, on peut donner un nouvel ordre de décalage jusqu'à trouver une unité de transaction disponible dont il est possible de modifier la cellule de transaction. Cependant, dans un tel cas, il faudra tenir compte des différents ordres de décalage successifs donnés et, pour les compenser, il faudra neutraliser dans la zone du solde autant d'unités de transaction qu'il y aura eu de décalages par rapport à la position qu'aurait dû occuper réellement la nouvelle butée, en mettant en oeuvre l'une ou l'autre des deux variantes exposées précédemment.

Egalement, en complément, on peut considérer qu'après un nombre déterminé d'ordres de décalages successifs, on refuse l'opération de crédit ou de débit puisqu'il existe dans la mémoire un trop grand nombre de cellules non modifiables.

Dans un mode de mise en oeuvre, on peut par exemple considérer que trois décalages successifs infructueux entraînent le refus de l'opération de débit ou de crédit souhaitée.

De plus, s'il n'existe pas suffisamment de cellules disponibles pour réaliser la butée décalée et/ou les compensations, alors la transaction est refusée.

En conclusion, l'invention est particulièrement avantageuse puisqu'elle met en oeuvre les mêmes fonctions que ce soit pour une transaction portant sur un débit, ou une transaction portant sur un crédit. La neutralisation systématique des unités de transaction ayant servi à la constitution de la butée précédente, lors de la création d'une nouvelle butée suite à une transaction, permet de gagner un temps considérable sur le traitement, notamment lors des opérations de crédit, car ceci évite d'avoir à relire toute la mémoire pour neutraliser les unités de transaction ayant été utilisées depuis la dernière opération de crédit.

Par ailleurs, en complément des performances notables d'un dispositif mettant en oeuvre le procédé de l'invention, un autre intérêt de l'invention réside dans le fait que l'utilisateur, ou le système de traitement, n'a plus besoin de connaître la configuration interne de la mémoire réservée pour les transactions, comme c'était le cas avec les systèmes et procédés de l'art antérieur qui nécessitaient une connaissance parfaite du contenu de la mémoire, notamment lors des opérations de neutralisation. Ici, toutes les opérations sont totalement transparentes et les risques de dysfonctionnement ou d'erreurs sont totalement pris en compte.

La recherche de l'élément contenant l'ancienne butée, afin de déterminer le point de départ du comptage des unités correspondant à la transaction à effectuer, permet un gain de temps considérable puisque la mémoire n'est pas lue cellule par cellule, étant donné qu'une lecture cellule par cellule n'est effectuée que dans la paire d'éléments dans laquelle la butée est détectée.

Enfin, les dysfonctionnements pouvant survenir lors de la mise en oeuvre du procédé sont pris en compte, alors que l'art antérieur ne prévoit rien à ce sujet, de sorte qu'un système mettant en oeuvre le procédé de l'invention est particulièrement sûr et fiable, ce qui dans le cas de l'utilisation en porte-monnaie électronique notamment, évite la perte de monnaie pour le titulaire d'une carte à mémoire qui serait utilisée de cette façon, ou pour l'organisme fournisseur de monnaie.

Un système mettant en oeuvre le procédé de l'invention pourrait être bâti autour d'un microprocesseur de format de traitement usuel, par exemple de huit bits, et la mémoire utilisée pour la gestion des unités homogènes pourrait être une mémoire de type EPROM, c'est-à-dire dont le contenu de l'une ou l'autre des cellules peut être modifié une seule fois par application d'un signal électrique.

## Revendications

1. Procédé de gestion d'une mémoire électronique représentative d'unités homogènes prétéderminées, consistant à inscrire en mémoire une butée indiquant la solde à l'issue d'une transaction portant sur lesdites unités, et à partager la mémoire en deux séries (Z1, Z2) de cellules de façon que chaque cellule de la première série soit couplée avec une cellule déterminée de la seconde série, chaque couple de cellules ainsi constitué formant une unité de transaction, procédé dans lequel une transaction est prise en compte par la création d'une nouvelle butée dont l'emplacement est défini à partir de la position d'une butée précédente, en modifiant l'état d'une cellule de l'une des séries, et en laissant en son état initial la cellule correspondente de l'autre série, caractérisé en ce qu'il consiste en outre à :
- partager chaque série de cellules en éléments (E11, E12,.... E1n) de même format, contenant un nombre (k) non unitaire de cellules (C1, C2,... Ck), chaque élément de la première série étant apparié avec un élément de la seconde de façon que chaque cellule d'un élément de la première série soit couplée avec une cellule de l'élément correspondant de la seconde série;
- utiliser ladite butée pour comptabiliser à la fois un débit et un crédit, cette butée divisant lesdites séries de cellules (Z1, Z2) en deux zones, à savoir une zone représentative d'un solde contenant les unités de transaction disponibles et une zone représentative d'un pouvoir accréditif contenant les unités de transaction qu'il est possible d'utiliser pour accroître le solde, un débit de (d) unités étant comptabilisé en inscrivant la nouvelle butée sur la (d)ième unité de transaction disponible comptée depuis la butée précédente dans la zone de solde, tandis qu'un crédit de (c) unités est comptabilisé en inscrivant la nouvelle butée sur la (c)ième unité de transaction disponible comptée depuis la butée précédente dans la zone de pouvoir accréditif;
- neutraliser la butée précédente lors de chaque transaction par modification de l'état de la cellule non modifiée lors de sa création; et
- identifier la position de la butée précédente, à partir de laquelle est calculée celle de la nouvelle butée, en recherchant tout d'abord la paire d'éléments dans laquelle se trouve cette butée précédente par utilisation d'une opération logique appliquée à différentes paires d'éléments des première et seconde séries et apte à produire un résultat particulier dans le cas de ladite paire d'éléments recherchée, puis en comparant successivement, dans cette paire d'éléments, les deux cellules de chaque unité de transaction jusqu'à détecter ladite butée précédente

2. Procédé selon la revendication 1 caractérisé en ce que le solde d'unités est constitué par le nombre d'unités de transaction disponibles, c'est-à-dire les couples de cellules dont les deux cellules sont dans leur état d'origine, et qui sont compris entre une première extrémité de la zone allouée aux transactions et la butée, et en ce que le pouvoir accréditif, c'est-à-dire le nombre d'unités de transaction qu'il est possible d'utiliser pour accroître le solde, est constitué par le nombre d'unités de transaction disponibles moins une comprises entre la butée et la seconde extrémité de la zone.

3. Procédé selon la revendication 1, ou la revendication 2, caractérisé en ce que, pour déterminer la position de la nouvelle butée et créer cette dernière lors d'une transaction, on comptabilise depuis la position de la butée précédente, dans la zone représentative du solde s'il s'agit d'une opération de débit, ou dans la zone représentative du pouvoir accréditif s'il s'agit d'une opération de crédit, un nombre de cellules de la seconde série (Z2) non modifiées, c'est-à-dire qui correspondent à des unités disponibles, et on ignore les cellules modifiées de la seconde série, c'est-à-dire qui correspondent à des unités de transaction annulées, et on vient modifier l'état de la cellule de la première série couplée à la dernière cellule comptée en seconde série, pour créer la nouvelle butée.

4. Procédé selon la revendication 3, caractérisé en ce que lorsque, suite à la création d'une nouvelle butée lors d'une tentative sur une opération de débit ou de crédit, il est impossible, pour une raison interne à la mémoire, de modifier l'état de la cellule de la butée précédente située en seconde série afin de l'annuler, ce qui amènerait à avoir dans la mémoire deux unités de transaction ayant une configuration de butée, alors on considère que, parmi ces deux éléments, la butée précédente constitue une nouvelle limite au pouvoir accréditif.

5. Procédé selon la revendication 4, caractérisé en ce que, lorsqu'il est impossible, pour des raisons internes à la mémoire, de modifier l'état de la cellule de la première série correspondant à la nouvelle butée à créer, on recherche, entre la position qu'aurait dû occuper cette nouvelle butée et la limite du pouvoir accréditif, dans le cas d'un crédit, ou entre la position qu'aurait dû occuper la nouvelle butée et la butée précédente dans le cas d'un débit, la première unité de transaction disponible dont il est possible de mofifier l'état de la cellule qu'elle comporte en première série (Z1), et on modifie l'état de ladite cellule située en première série, de façon à constituer la nouvelle butée, et afin de compenser le décalage occasionné par ce dysfonctionnement, on intervient sur un nombre d'unités de transaction disponibles dans la partie de mémoire représentative du solde, ledit nombre correspondant au nombre d'unités dont a été décalée la nouvelle butée par rapport à la position qu'elle aurait dû occuper, d'une part en modifiant l'état des cellules situées dans la seconde série desdites unités de transaction disponibles, et d'autre part en tentant de modifier, aussitôt après avoir modifié l'état d'une cellule située en seconde série de chacune de ces unités de transaction disponibles, I'état de la cellule correspondante située en première série, de façon à tenter de neutraliser chacune desdites unités de transaction, et en ce que, après avoir effectué cette compensation, on tente de neutraliser la butée précédente en modifiant l'état de la cellule située en seconde série.

6. Procédé selon la revendication 5, caractérisé en que, afin de compenser le décalage occasionné par la création d'une nouvelle butée lors d'une tentative de crédit, on intervient sur un nombre d'unités de transaction disponibles dans la partie de mémoire représentative du solde, comprise entre la butée précédente et la nouvelle butée.

7. Procédé selon la revendication 4, caractérisé en que, lorsqu'il est impossible pour des raisons internes à la mémoire, de modifier l'état de la cellule de la première série correspondant à la nouvelle butée à créer, on recherche, entre la position qu'aurait dû occuper cette nouvelle butée et la limite du pouvoir accréditif dans le cas d'un crédit, ou entre la position qu'aurait dû occuper la nouvele butée et la butée précédente dans le cas d'un débit, la première unité de transaction disponible dont il est possible de modifier l'état de la cellule qu'elle comporte en première série (Z1), et on modifie l'état de ladite cellule située en première série, de façon à constituer la nouvelle butée, on tente de neutraliser la butée précédente en modifiant l'état de sa cellule située en seconde série, et afin de compenser le décalage occasionné par ce dysfonctionnement, on intervient sur un nombre d'unités de transaction disponibles dans la partie de mémoire représentative du solde, ledit nombre correspondant au nombre d'unités dont a été décalée la nouvelle butée par rapport à la position qu'elle aurait dû occuper, d'une part en modifiant l'état des cellules situées dans la seconde série desdites unités de transaction disponibles, et d'autre part en tentant de modifier aussitôt après avoir modifié l'état d'une cellule située en seconde série de chacune de ces unités de transaction disponibles, I'état de la cellule correspondante située en première série, de façon à tenter de neutraliser chacune desdites unités de transaction.

8. Système de gestion d'une mémoire électronique représentative d'unités homogènes prédéterminées comprenant un microprocesseur et une mémoire électronique programmable électriquement associée à ce microprocesseur, le système incluant des moyens pour inscrire en mémoire une butée indiquant le solde à l'issue d'une transaction portant sur lesdites unités et partager la mémoire en deux séries (Z1, Z2) de cellules de façon que chaque cellule de la première série soit couplée avec une cellule déterminée de la seconde série, chaque couple de cellules ainsi constitué formant une unité de transaction, système dans lequel une transaction est prise en compte par la création d'une nouvelle butée dont l'emplacement est défini à partir de la position d'une butée précédente, en modifiant l'état d'une cellule de l'une des séries, et en laissant en son état initial la cellule correspondante de l'autre série, caractérisé en ce que ladite mémoire est agencée de façon que chaque série de cellules est partagée en éléments (E11, E12,.... E1n) de même format, correspondant au format de traitement du microprocesseur, contenant un nombre (k) non unitaire de cellules (C1, C2,... Ck), chaque élément de la première série étant apparié avec un élément de la seconde de façon que chaque cellule d'un élément de la première série soit couplée avec une cellule de l'élément correspondant de la seconde série, et en ce que le système de gestion comprend en outre :
- des moyens pour utiliser ladite butée pour comptabiliser à la fois un débit et un crédit, cette butée divisant lesdites séries de cellules (Z1, Z2) en deux zones, à savoir une zone représentative d'un solde contenant les unités de transaction disponibles et une zone représentative d'un pouvoir accréditif contenant les unités de transaction qu'il est possible d'utiliser pour accroître le solde, un débit de (d) unités étant comptabilisé en inscrivant la nouvelle butée sur la (d)ième unité de transaction disponible comptée depuis la butée précédente dans la zone de solde, tandis qu'un crédit de (c) unités est comptabilisé en inscrivant la nouvelle butée sur la (c)ième unité de transaction disponible comptée depuis la butée précédente dans la zone de pouvoir accréditif;
- des moyens pour neutraliser la butée précédente lors de chaque transaction par modification de l'état de la cellule non modifiée lors de sa création
- des moyens pour identifier la position de la butée précédente, à partir de laquelle est calculée celle de la nouvelle butée, en recherchant tout d'abord la paire d'éléments dans laquelle se trouve cette butée précédente par utilisation d'une opération logique appliquée à différentes paires d'éléments des première et seconde séries et apte à produire un résultat particulier dans le cas de ladite paire d'éléments recherchée, puis en comparant successivement, dans cette paire d'éléments, les deux cellules de chaque unité de transaction jusqu'à détecter ladite butée précédente.

9. Système selon la revendication 8, caractérisé en ce que le microprocesseur et la mémoire sont incorporés dans un objet portatif.

## Patentansprüche

1. Verfahren zur Verwaltung eines für vorbestimmte gleichartige Einheiten repräsentativen elektronischen Speichers, das darin besteht, daß eine Grenze in den Speicher eingeschrieben wird, die den Saldo am Ende einer die Einheiten betreffenden Transaktion angibt, und daß der Speicher derart in zwei Sätze (Z1, Z2) von Zellen aufgeteilt wird, daß jede Zelle des ersten Satzes mit einer vorbestimmten Zelle des zweiten Satzes gekoppelt wird, wobei jedes auf diese Weise gebildete Zellenpaar eine Transaktionseinheit bildet, wobei eine Transaktion durch die Erzeugung einer neuen Grenze berücksichtigt wird, deren Platz ausgehend von der Position einer vorhergehenden Grenze definiert wird, indem der Zustand einer Zelle eines der Sätze verändert wird, dadurch gekennzeichnet, daß es ferner darin besteht,
- daß jeder Satz von Zellen in Elemente (E11, E12, ..., Ein) gleichen Formats mit einer von Eins verschiedenen Anzahl (k) von Zellen (C1, C2, ..., Ck) aufgeteilt wird, wobei jedes Element des ersten Satzes so mit einem Element des zweiten Satzes gepaart wird, daß jede Zelle eines Elements des ersten Satzes mit einer Zelle des entsprechenden Elements des zweiten Satzes gekoppelt ist;
- daß die Grenze dazu verwendet wird, gleichzeitig eine Lastschrift und eine Gutschrift zu verbuchen, wobei diese Grenze die Sätze (Z1, Z2) von Zellen in zwei Zonen trennt, nämlich in eine Zone, die für einen Saldo repräsentativ ist und die verfügbaren Transaktionseinheiten enthält, und in eine Zone, die für ein eingeräumtes Guthabenvolumen repräsentativ ist, die die Transaktionseinheiten enthält, die zum Erhöhen des Saldos verwendet werden können, wobei eine Lastschrift von (d) Einheiten verbucht wird, indem die neue Grenze bei der (d)ten verfügbaren Transaktionseinheit, gezählt von der vorhergehenden Grenze, in die Saldozone eingeschrieben wird, während eine Gutschrift von (c) Einheiten verbucht wird, indem die neue Grenze bei der (c)ten verfügbaren Transaktionseinheit, gezählt von der vorhergehenden Grenze, in die Zone des eingeräumten Guthabenvolumens eingeschrieben wird;
- daß die vorhergehende Grenze bei jeder Transaktion durch Ändern des Zustands der Zelle unwirksam gemacht wird, die bei ihrer Erzeugung nicht geändert wurde; und
- daß die Position der vorhergehenden Grenze, von der aus die der neuen Grenze gezählt wird, identifiziert wird, indem zunächst das Paar von Elementen, in dem sich diese vorhergehende Grenze befindet, unter Anwendung einer logischen Operation gesucht wird, die auf verschiedene Paare von Elementen des ersten und des zweiten Satzes angewendet wird und geeignet ist, im Fall des gesuchten Paares von Elementen ein besonderes Ergebnis zu erzeugen, und dann in diesem Paar von Elementen aufeinanderfolgend die beiden Zellen einer jeden Transaktionseinheit verglichen werden, bis die vorhergehende Grenze gefunden wird.

2. Verfahren nach Anspruch 1, dadurch gekennzeichnet, daß der Saldo von Einheiten durch die Anzahl von verfügbaren Transaktionseinheiten, d.h. die Zellenpaare gebildet ist, deren zwei Zellen ihren ursprünglichen Zustand aufweisen und die zwischen einem ersten Ende der für die Transaktionen eingeräumten Zone und der Grenze liegen, und daß das eingeräumte Guthabenvolumen, d.h. die Anzahl von Transaktionseinheiten, die zur Erhöhung des Saldos verwendet werden können, durch die Anzahl von zwischen der Grenze und dem zweiten Ende der Zone enthaltenen verfügbaren Transaktionseinheiten weniger eins gebildet ist.

3. Verfahren nach Anspruch 1 oder 2, dadurch gekennzeichnet, daß zur Bestimmung der Position der neuen Grenze und zu deren Erzeugung bei einer Transaktion ab der Position der vorhergehenden Grenze in der für den Saldo repräsentativen Zone, wenn es sich um eine Lastschriftoperation handelt, oder in der für das eingeräumte Guthabenvolumen repräsentativen Zone, wenn es sich um eine Gutschriftoperation handelt, eine Anzahl von nicht geänderten Zellen des zweiten Satzes (Z2), d.h. von Zellen, die verfügbaren Einheiten entsprechen, verbucht wird, während die geänderten Zellen des zweiten Satzes, d.h. die, die unwirksam gemachten Transaktionseinheiten entsprechen, außer acht gelassen werden, und daß der Zustand der Zelle des ersten Satzes geändert wird, die mit der letzten, in dem zweiten Satz gezählten Zelle gekoppelt ist, um die neue Grenze zu erzeugen.

4. Verfahren nach Anspruch 3, dadurch gekennzeichnet, daß dann, wenn es im Anschluß an die Erzeugung einer neuen Grenze bei einem Versuch bezüglich einer Lastschrift- oder Gutschriftoperation aus speicherinternen Gründen nicht möglich ist, den Zustand der Zelle der vorhergehenden Grenze in dem zweiten Satz zu ändern, um diese unwirksam zu machen, was zu zwei in dem Speicher vorliegenden Transaktionseinheiten mit einer Grenze-Konfiguration führen würde, davon ausgegangen wird, daß von den beiden Elementen die vorhergehende Grenze ein neues Limit für das eingeräumte Guthabenvolumen bildet.

5. Verfahren nach Anspruch 4, dadurch gekennzeichnet, daß dann, wenn es aus speicherinternen Gründen nicht möglich ist, den Zustand der Zelle des ersten Satzes zu ändern, die der neuen zu erzeugenden Grenze entspricht, zwischen der Position, die diese neue Grenze einnehmen müßte, und dem Limit des eingeräumten Guthabenvolumens im Fall einer Gutschrift oder zwischen der Position, die die neue Grenze einnehmen müßte, und der vorhergehenden Grenze im Fall einer Lastschrift die erste verfügbare Transaktionseinheit gesucht wird, bei der der Zustand der Zelle, die sie in dem ersten Satz (Z1) aufweist, geändert werden kann, der Zustand der in dem ersten Satz liegenden Zelle so geändert wird, daß die neue Grenze gebildet wird, und zur Kompensation der durch diese Störung hervorgerufenen Verschiebung auf eine Anzahl von verfügbaren Transaktionseinheiten in dem für den Saldo repräsentativen Speicherteil eingewirkt wird, wobei die Anzahl der Anzahl von Einheiten entspricht, um die die neue Grenze bezüglich der Position verschoben wurde, die sie hätte einnehmen müssen, indem einerseits der Zustand der in dem zweiten Satz der verfügbaren Transaktionseinheiten liegenden Zellen geändert und andererseits versucht wird, gleich nach dem Ändern des Zustands einer in dem zweiten Satz liegenden Zelle jeder dieser verfügbaren Transaktionseinheiten den Zustand der in dem ersten Satz liegenden entsprechenden Zelle zu ändern, und daß versucht wird, jede dieser Transaktionseinheiten unwirksam zu machen, und daß nach dieser Kompensation versucht wird, die vorhergehende Grenze unwirksam zu machen, indem der Zustand der in dem zweiten Satz liegenden Zelle geändert wird.

6. Verfahren nach Anspruch 5, dadurch gekennzeichnet, daß zur Kompensation der durch die Erzeugung einer neuen Grenze bei einem Gutschriftversuch herbeigeführten Verschiebung auf eine Anzahl von verfügbaren Transaktionseinheiten in dem für den Saldo repräsentativen Speicherteil zwischen der vorhergehenden Grenze und der neuen Grenze eingewirkt wird.

7. Verfahren nach Anspruch 4, dadurch gekennzeichnet, daß dann, wenn es aus speicherinternen Gründen nicht möglich ist, den Zustand der Zelle des ersten Satzes zu ändern, die der zu erzeugenden neuen Grenze entspricht, zwischen der Position, die diese neue Grenze einnehmen müßte, und dem Limit des eingeräumten Guthabenvolumens im Fall einer Gutschrift oder zwischen der Position, die die neue Grenze einnehmen müßte, und der vorhergehenden Grenze im Fall einer Lastschrift die erste verfügbare Transaktionseinheit gesucht wird, bei der es möglich ist, den Zustand der Zelle zu ändern, die sie in dem ersten Satz (Z1) enthält, der Zustand der in dem ersten Satz liegenden Zelle so geändert wird, daß die neue Grenze gebildet wird, versucht wird, die vorhergehende Grenze unwirksam zu machen, indem der Zustand ihrer in dem zweiten Satz liegenden Zelle geändert wird, und zur Kompensation der durch diese Störung hervorgerufenen Verschiebung auf eine Anzahl von verfügbaren Transaktionseinheiten in dem für den Saldo repräsentativen Speicherteil eingewirkt wird, wobei die Anzahl der Anzahl von Einheiten entspricht, um die die neue Grenze bezüglich der Position, die sie hätte einnehmen müssen, verschoben wurde, indem einerseits der Zustand der in dem zweiten Satz liegenden Zellen der verfügbaren Transaktionseinheiten verändert und andererseits versucht wird, gleich nach dem Ändern des Zustands einer in dem zweiten Satz liegenden Zelle einer jeden dieser verfügbaren Transaktionseinheiten den Zustand der in dem ersten Satz liegenden entsprechenden Zelle zu ändern, um zu versuchen, jede dieser Transaktionseinheiten unwirksam zu machen.

8. System zur Verwaltung eines für vorbestimmte gleichartige Einheiten repräsentativen elektronischen Speichers, mit einem Mikroprozessor und einem elektrisch programmierbaren, diesem Mikroprozessor zugeordneten elektronischen Speicher, wobei das System Mittel enthält, um eine Grenze in den Speicher einzuschreiben, die den Saldo am Ende einer die Einheiten betreffenden Transaktion angibt, und um den Speicher so in zwei Sätze (Z1, Z2) von Zellen aufzuteilen, daß jede Zelle des ersten Satzes mit einer bestimmten Zelle des zweiten Satzes gekoppelt ist, wobei jedes auf diese Weise gebildete Zellenpaar eine Transaktionseinheit bildet, bei welchem System eine Transaktion durch die Erzeugung einer neuen Grenze berücksichtigt wird, deren Platz ausgehend von der Position einer vorhergehenden Grenze definiert wird, indem der Zustand einer Zelle eines der Sätze geändert und die entsprechende Zelle des anderen Satzes in ihrem anfänglichen Zustand belassen wird, dadurch gekennzeichnet, daß der Speicher so ausgelegt ist, daß jeder Satz von Zellen in Elemente (E11, E12, ..., E1n) gleichen, dem Verarbeitungsformat des Mikroprozessors entsprechenden Formats mit einer von Eins verschiedenen Anzahl (k) von Zellen (C1, C2, ..., Ck) aufgeteilt ist, wobei jedes Element des ersten Satzes so mit einem Element des zweiten Satzes gepaart ist, daß jede Zelle eines Elements des ersten Satzes mit einer Zelle des entsprechenden Elements des zweiten Satzes gekoppelt ist, ferner enthaltend:
- Mittel zur Verwendung der Grenze für das gleichzeitige Verbuchen einer Lastschrift und einer Gutschrift , wobei diese Grenze die Sätze (Z1, Z2) von Zellen in zwei Zonen aufteilt, nämlich eine für einen Saldo repräsentative, die verfügbaren Transaktionseinheiten enthaltende Zone und eine für ein eingeräumtes Guthabenvolumen repräsentative Zone, die die Transaktionseinheiten enthält, die zur Erhöhung des Saldos verwendet werden können, wobei ein Lastschrift von (d) Einheiten verbucht wird, indem die neue Grenze bei der (d)ten verfügbaren Transaktionseinheit, gezählt von der vorhergehenden Grenze, in die Saldozone eingeschrieben wird, während eine Gutschrift von (c) Einheiten verbucht wird, indem die neue Grenze bei der (c)ten verfügbaren Transaktionseinheit, gezählt von der vorhergehenden Grenze, in die Zone eines eingeräumten Guthabenvolumens eingeschrieben wird;
- Mittel, um die vorhergehende Grenze bei jeder Transaktion durch Ändern des Zustands der Zelle unwirksam zu machen, die bei der Erzeugung der Grenze nicht geändert wurde; und
- Mittel zum Identifizieren der Position der vorhergehenden Grenze, ab der die Position der neuen Grenze berechnet wird, indem zunächst das Paar von Elementen, in dem sich diese vorhergehende Grenze befindet, unter Verwendung einer logischen Operation gesucht wird, die auf verschiedene Paare von Elementen des ersten und zweiten Satzes angewendet wird und geeignet ist, im Fall des gesuchten Paares von Elementen ein besonderes Ergebnis zu liefern, und indem dann in diesem Paar von Elementen aufeinanderfolgend die beiden Zellen einer jeden Transaktionseinheit verglichen werden, bis die vorhergehende Grenze gefunden wird.

9. System nach Anspruch 8, dadurch gekennzeichnet, daß der Mikroprozessor und der Speicher in einen tragbaren Gegenstand eingebaut sind.

## Claims

1. A method for management of an electronic memory representing predetermined homogeneous units, consisting of writing into memory a stop indicating the balance at the end of a transaction bearing on said units, and of dividing the memory into two series (Z1, Z2) of cells, such that each cell of the first series is paired with a predetermined cell of the second series, each pair of cells thus constituted forming one transaction unit, in which process a transaction is taken into account by creating a new stop, the location of which is defined from the position of the previous stop by modifying the state of one cell of one of the series, characterised in that it additionally consists of:
- dividing each series of cells into elements (E11, E12,...E1n) of the same format, containing a non-unitary number (k) of cells (C1, C2,...Ck), each element of the first series being paired with an element of the second such that each cell of an element of the first series is paired with a cell of the corresponding element of the first series;
- using said stop to take into account a debit and a credit at the same time, this stop dividing said series of cells (Z1, Z2) into two zones, namely one zone representing a balance containing the available transaction units and one zone representing an accreditive power containing the transaction units that it is possible to use to increase the balance, a debit of (d) units being taken into account by writing the new stop on the (d)th available transaction unit counted from the previous stop in the balance zone, whereas a credit of (c) units is taken into account by writing the new stop on the (c)th available transaction unit counted from the previous stop in the accreditive power zone;
- neutralizing the previous stop at the time of each transaction by modifying the state of the cell unmodified at the time of its creation; and
- identifying the position of the previous stop, from which that of the new stop is calculated, by firstly seeking the pair of element in which this previous stop is located by using a logical operation, applied to different pairs of elements in the first and second series, and suitable for producing a particular result in the case of said sought pair of elements, then by comparing successively, in this pair of elements, the two cells of each transaction unit until said previous stop is detected.

2. A method according to claim 1, characterized in that the balance of units is constituted by the number of available transaction units, that is, the pairs of cells of which the two cells are in their original state, and which are located between a first end of the zone allocated to the transactions and the stop, and that the accreditive power, that is, the number of transaction units that it is possible to use to increase the balance, is constituted by the number of available transaction units minus one located between the stop and the second end of the zone.

3. A method according to claim 1 or claim 2, characterized in that to determine the position of the new stop and to create the latter at the time of the transaction, a number of unmodified cells of the second series (Z2), that is, a number corresponding to the available units, is taken into account from the position of the previous stop, in the zone representing the balance in the case of a debit operation, or representing the accreditive power in the case of a credit operation, and the modified cells of the second series, that is, those corresponding to the cancelled transaction units, are ignored, and the state of the cell of the first series paired with the last cell counted in the second series is modified in order to create the new stop.

4. A method according to claim 3, characterized in that after the creation of a new stop at the time of an attempt at a debit or credit operation, whenever it is possible for some reason internal to the memory to modify the state of the cell of the previous stop located in the second series in order to cancel it, which would lead to having two transaction units having the configuration of a stop in the memory, then it is assumed that among these two elements, the previous stop comprises a new limit to the accreditive power.

5. A method according to claim 4, characterized in that whenever it is impossible, for reasons internal to the memory, to modify the state of the cell of the first series corresponding to the new stop to be created, a search is made, between the position that this new stop should have occupied and the limit of the accreditive power, in the case of a credit, or between the position that the new stop should have occupied and the previous stop, in the case of a debit, for the first available transaction unit of which it is possible to modify the state of the cell that it includes in the first series (Z1), and the state of this cell located in the first series is modified in such a manner as to constitute the new stop, and in order to compensate for the shifting occasssioned by this dysfunction, intervention is made upon a number of available transaction units in the portion of the memory representing the balance, said number corresponding to the number of units by which the new stop has been shifted with respect to the position that it should have occupied, on the one hand by modifying the state of the cells located in the second series of said available transaction units, and on the other hand by attempting, as soon as possible after having modified the state of a cell located in the second series of each of these available transaction units, to modify the state of the corresponding cell located in the first series, in such a manner as to attempt to neutralize each of said transaction units, and that after having performed this compensation, an attempt is made to neutralize the previous stop by modifying the state of this cell located in the second series.

6. A method according to claim 5, characterized in that in order to compensate for the shifting caused by the creation of a new stop at the time of an attempt at credit, an intervention is made upon a number of transaction units available in the portion of the memory representing the balance, included between the previous stop and new stop.

7. A method according to claim 4, characterized in that whenever it is impossible, for reasons internal to the memory, to modify the state of the cell of the first series corresponding to the new stop to be created, a search is made, between the position that this new stop should have occupied and the limit of the accreditive power in the case of a credit, or between the position that the new stop should have occupied and the previous stop in the case of a debit, for the first available transaction unit of which it is possible to modify the state of the cell that it includes in the first series (Z1), and the state of said cell located in the first series is modified, in such a manner as to constitute the new stop, an attempt is made to neutralize the previous stop by modifying the state of its cell located in the second series, and in order to compensate for the shifting occasioned by this dysfunction, an intervention is made upon a number of available transaction units in the portion of memory representing the balance, said number corresponding to the number of units by which the new stop has been shifted with respect to the position that it should have occupied, on the one hand by modifying the state of the cells located in the second series of said available transaction units, and on the other hand by attempting as soon as possible after having modified the state of a cell located in the second series of each of these available transaction units, to modify the state of the corresponding cell located in the first series, in such a manner as to neutralize each of said transaction units.

8. A system for management of an electronic memory representing predetermined homogeneous units, including a microprocessor and an electrically programmable electronic memory, associated with this microprocessor, the system including means for writing into memory a stop indicating the balance at the end of a transaction bearing on said units and dividing the memory into two series (Z1, Z2) of cells, such that each cell of the first series is paired with a predetermined cell of the second series, each pair of cells thus constituted forming one transaction unit, in which system a transaction is taken into account by creating a new stop, the location of which is defined from the position of the previous stop, by modifying the state of one cell of one of the series, and by leaving the corresponding cell of the other series in its initial state, characterised in that said memory is arranged such that each series of cells is divided into elements (E11, E12,...E1n) of the same format, corresponding to processing format of the microprocessor, containing a non-unitary number (k) of cells (C1, C2,...Ck), each element of the first series being paired with an element of the second such that each cell of an element of the first series is paired with a cell of the corresponding element of the second series, and in that the management system further comprises:
- means for using said stop to take into account a debit and a credit at the same time, this stop dividing said series of cells (Z1, Z2) into two zones, namely one zone representing a balance containing the available transaction units and one zone representing an accreditive power containing the transaction units that it is possible to use to increase the balance, a debit of (d) units being taken into account by writing the new stop on the (d)th available transaction unit counted from the previous stop in the balance zone, whereas a credit of (c) units is taken into account by writing the new stop on the (c)th available transaction unit count from the previous stop in the accreditive power zone;
- means for neutralising the previous stop at the time of each transaction by modifying the state of the cell unmodified at the time of its creation;
- means for identifying the position of the previous stop, from which that of the new stop is calculated, by firstly seeking the pair of elements in which this previous stop is located by using a logical operation applied to different pairs of elements of the first and second series and suitable for producing a particular result in the case of said sought pair of elements, then by comprising successively, in this pair of elements, the two cells of each transaction unit until said previous stop is detected.

9. A system according to claim 8, characterised in that the microprocessor and the memory are incorporated in a portable object.
